# EUROPEAN PATENT SPECIFICATION

(11) **EP 2 887 497 B1**
(45) Date of publication and mention of the grant of the patent: **28.02.2018**
(21) Application number: 14197472.5
(22) Date of filing: 11.12.2014
(51) Int. Cl.: H02J 13/00, G05B 15/02, G05F 5/00, G05B 23/02

(54) **Apparatus and method for correcting acquired data**
Vorrichtung und Verfahren zur Korrektur erfasster Daten
Appareil et procédé de correction des données acquises

(30) Priority: 18.12.2013 KR 20130158737
(43) Date of publication of application: 24.06.2015
(73) Proprietor: LSIS Co., Ltd., Anyang-si, Gyeonggi-do 431-848 (KR)
(72) Inventor: Young In, Kim, 463-738 Gyeonggi-do (KR); Yun Hyuk, Choi, 431-836 Gyeonggi-do (KR); Yoon Sung, Cho, Gyeonggi-Do, 14119 (KR)
(74) Representative: Awapatent AB

(56) References cited:
- EP-A1- 2 632 007
- US-A1- 2011 282 508

## Description

### BACKGROUND OF THE DISCLOSURE

### 1. Field of the Disclosure

The present disclosure relates to an apparatus and a method for correcting data through system analysis for each period in the field of an energy management system (EMS).

### 2. Description of the Background Art

An energy management system (EMS) is an automatic control system capable of collecting data of nation-wide power stations and major substations for production of economic electric power and provision of the power to loads, whereby a power system network can be generally controlled and loads can be effectively distributed.

Accordingly, the EMS should manage and control a high voltage DC system built between districts. To this end, the EMS analyzes a system based on actual operation information of the high voltage DC system, including a system analysis program.

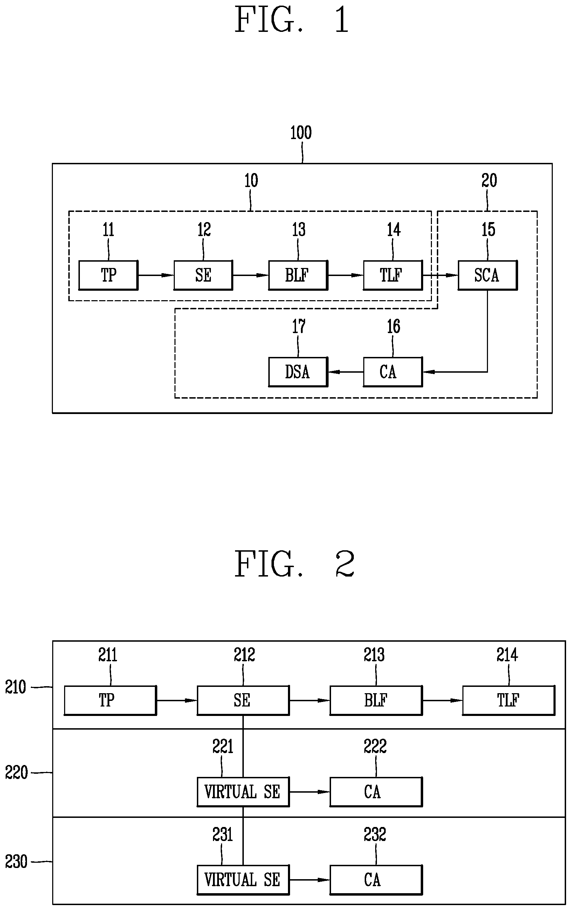

FIG. 1 is a block configuration diagram of a conventional system analyzing apparatus.

Referring to FIG. 1, the conventional system analyzing apparatus 100, as shown in FIG. 1, may be configured to include a topology processing (TP) unit 11, a state estimation (ES) unit 12, a bus distribution load factor (BLF) unit 13, a transmission loss sensitivity (TLF) unit 14, a short circuit analysis (SCA) unit 15, a contingency analysis (CA) unit 16, and a dynamic security assessment system (DSA) unit 17.

The TP unit 11 may acquire various kinds of data including circuit breaker information from a supervisory control and data acquisition (SCADA) system, and determine a current network connection state. The TP unit 11 may control an operation of each component based on the acquired data, and identify output data under the control.

The ES unit 12 may correct inaccurate measurement data caused by an error of a remote terminal unit (RTU) for spot data acquisition, a modem or a communication equipment, and provide an estimation value of unacquired data. That is, the ES unit 12 may estimate an actual state including bus voltages, loads, flows and the like of power stations and substations, using an actual system acquisition value including an error and a network model.

The BLF unit 13 may divide the acquired data for each district/manager/load using a predetermined algorithm, and calculate a coefficient through a load for each accumulated bus based on a temporal classification reference with respect to season/day/hour, thereby correcting an estimation value of the load.

The TLF unit 14 may calculate, as a sensitivity coefficient, influence on the entire power transmission loss when unit electric energy increases.

The SCA unit 15 may calculate an exact short-circuit capacity of a circuit breaker, provided against a short circuit, and correct a protection relay.

The CA unit 16 may expect a defect of power equipment including major power transmission lines and the like, and provide, in real time, information on places with abnormality including overloads, low voltages and the like of the other bus, line and transformer when the expected defect occurs, so that a plan for system weakness places at which the supply of power is expected can be established in advance.

The DSA unit 17 is a component capable of assessing power system security. The DSA unit 17 may decide the security of a system, and generate an alarm related to the decision and generate and output a system operation guideline.

As described above, the conventional system analyzing apparatus 100 has a form in which the components described above are systematically connected in a serial structure so that the operation of one component is completed, and an operation of the next component and a result output are made after an output according to the completed operation is made.

However, the components have different operation periods and different data input/output periods. That is, a time (period) of about 15 minutes is generally required in order to execute all application programs. Here, the application program is executed so that each component operates for the purpose of system analysis.

Based on a time having the shortest execution period of a component among the components, the data inputting and processing of application programs not executed within the corresponding time are completed, so that the data processing for previously changed data should be performed. Therefore, it is impossible to perform reverse estimation on which data the data processing is performed based on. US 2011/0282508 discloses a general grid security platform that can control power distribution and operations in a grid in real or near real time.

### SUMMARY OF THE DISCLOSURE

Therefore, an aspect of the detailed description is to provide an apparatus and a method for correcting data, which can obtain an exact and quick result in a system analyzing apparatus having different data processing periods.

To achieve these and other advantages and in accordance with the purpose of this specification, as embodied and broadly described herein, an apparatus for correcting acquired data, the apparatus includes: a topology processing (TP) unit configured to acquire data including circuit breaker information from a supervisory control and data acquisition (SCADA) system; and at least one system analyzing unit configured to store data for performing state estimation with respect to the data output from the TP unit, and process the stored data according to a predetermined period, wherein the system analyzing unit is classified into at least one data processing group according to the data processing period.

In one exemplary embodiment, the data processing group may include a state estimation (ES) unit configured to store the data output from the TP unit according to a data processing period; and at least one data processing unit configured to process the data stored in the ES unit according to a data processing period of a predetermined data processing group.

In one exemplary embodiment, the data processing units having the same data processing period may be connected in series to the ES units, and the at least one system analyzing unit may be connected in parallel to the TP unit.

In one exemplary embodiment, if corresponding data is output to the data processing unit as a data processing period arrives, the data stored in the ES unit may be renewed as the data input from the TP unit.

According to the apparatus and method of the present disclosure, it is possible to exactly and quickly process data according to different periods for system analysis.

According to the apparatus and method of the present disclosure, it is possible to perform data processing according to components having a systematic connection relationship.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block configuration diagram of a conventional system analyzing system;
FIG. 2 is a block configuration diagram of a system analyzing system according to an exemplary embodiment;
FIG. 3 is a flowchart illustrating an operation of processing system analysis data according to an exemplary embodiment; and
FIG. 4 is a screen exemplary view to be provided to a user in processing of system analysis data according to an exemplary embodiment.

### DETAILED DESCRIPTION OF THE DISCLOSURE

Description will now be given in detail of the exemplary embodiments, with reference to the accompanying drawings. For the sake of brief description with reference to the drawings, the same or equivalent components will be provided with the same reference numbers, and description thereof will not be repeated.

FIG. 2 is a block configuration diagram of a system analyzing system according to an exemplary embodiment.

Referring to FIG. 2, components of the system analyzing apparatus according to the exemplary embodiment may correspond to some of the components of the conventional system analyzing apparatus.

That is, the system analyzing apparatus according to the exemplary embodiment may use some of the components of the conventional system analyzing apparatus, and components for additional system analysis may be added for each system analysis period.

In the system analyzing apparatus according to the exemplary embodiment, a topology processing (TP) unit 211 for performing topology and a state estimation (ES) unit 212 for performing state estimation may be basically connected in a serial processing structure.

Data processed in the TP unit 211 and the ES unit 212 may be divided into data for each period, i.e., data in period A, data in period B, data in period C, and data in period D. The divided data may be processed by different processing units.

Accordingly, a group divided for each data processing period can be defined as a system analyzing unit including an ES unit and at least one data processing unit.

The divided data may be respectively output to ES units 212, 221 and 231.

That is, in the exemplary embodiment, as shown in FIG. 2, a bus distribution load factor (BLF) unit 213 and a transmission loss sensitivity (TLF) unit 214 may be components having the same data processing period. Thus, the BLF unit 213 and the TLF unit 214 can be classified as a data processing group 210 in the period A.

In the data classified in the TP unit 211 and the ES unit 212, a contingency analysis (CA) unit 222 may be classified as a data processing group 220 in the period B different from the period of the data processing group 210 in the period B.

A virtual ES unit 221 for temporarily storing (copying) data output from the TP unit 211 and the ES unit 212, included in the data processing group 210 in the period A, may be included in the data processing group 220 in the period B. The virtual ES unit 221 performs a function of temporarily storing state estimation data output every period A in order to process data every period B.

In the data classified in the TP unit 211 and the ES unit 212, a short circuit analysis (SCA) unit 232 may be classified as a data processing group 230 in the period C different from periods of the data processing groups in the periods A and B.

A virtual ES unit 231 for temporarily storing (copying) data output from the TP unit 211 and the ES unit 212, included in the data processing group 210 in the period A, may be included in the data processing group 230 in the period C. The virtual ES unit 231 performs a function of temporarily storing state estimation data output every period A in order to process data every period C.

That is, at least one virtual ES unit 221 or 231 may be included in the data processing group in each period. The virtual ES units included in the data processing group in each period may perform data processing storage functions for different periods.

Although the system analyzing apparatus classified into the data processing groups in the periods A to C has been described in the exemplary embodiment, the data processing group for each period may be extended or reduced according to periods of the components included in the system analyzing apparatus.

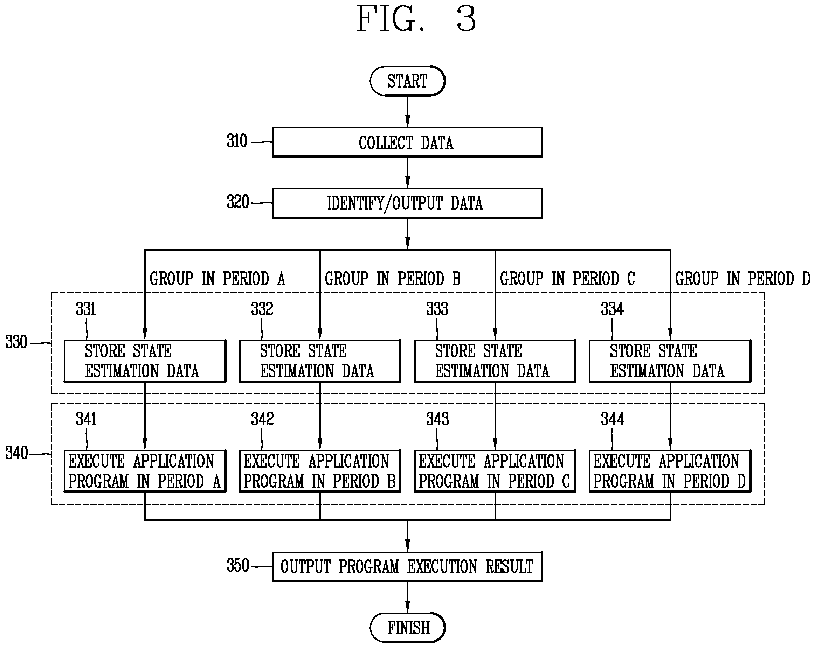

Hereinafter, an operation for processing system analysis data according to an exemplary embodiment will be described in detail with reference to FIG. 3.

FIG. 3 is a flowchart illustrating an operation of processing system analysis data according to an exemplary embodiment.

Referring to FIGS. 2 and 3, in the processing of system analysis data according to the exemplary embodiment, the TP unit 211 included in the data processing group 210 in the period A in the system analyzing apparatus acquires data (S310), and identifies a kind of the data and a data processing period (S320). The data acquired and identified from the TP unit 211 may be output to the ES units 212, 221 or 231 in the data processing group for each period.

That is, the state estimation data according to each data processing period may be received in each (virtual) ES unit 212, 221 or 231 to be stored until the time when the processing period arrives.

For example, the processing of system analysis data according to the exemplary embodiment will be described by assuming that, with respect to data output from the TP unit 211, the data processing periods of the data processing groups in the periods A, B and C are one minute, five minutes and two minutes, respectively.

The data processed in the TP unit 211 may be output to a virtual ES unit corresponding to each data processing group according to each data and data processing period. According to the assumed processing periods, the data processing group in the period A may store and renew the data every one minute, the data processing group in the period B may store and renew the data every five minutes, and the data processing group in the period C may store and renew the data every two minutes.

Therefore, the virtual ES unit 212, 221 or 231 may store corresponding data during a predetermined data processing period (S330), and execute an application program for each period by outputting the stored data to each of the processing units (the CA unit 222 and the SCA unit 232) when the corresponding period arrives (S340). In this state, the virtual ES unit 212, 221 or 231 can renew the data.

The data processed at a time corresponding to each period may include an application program result value and be output as system analysis result data (S350).

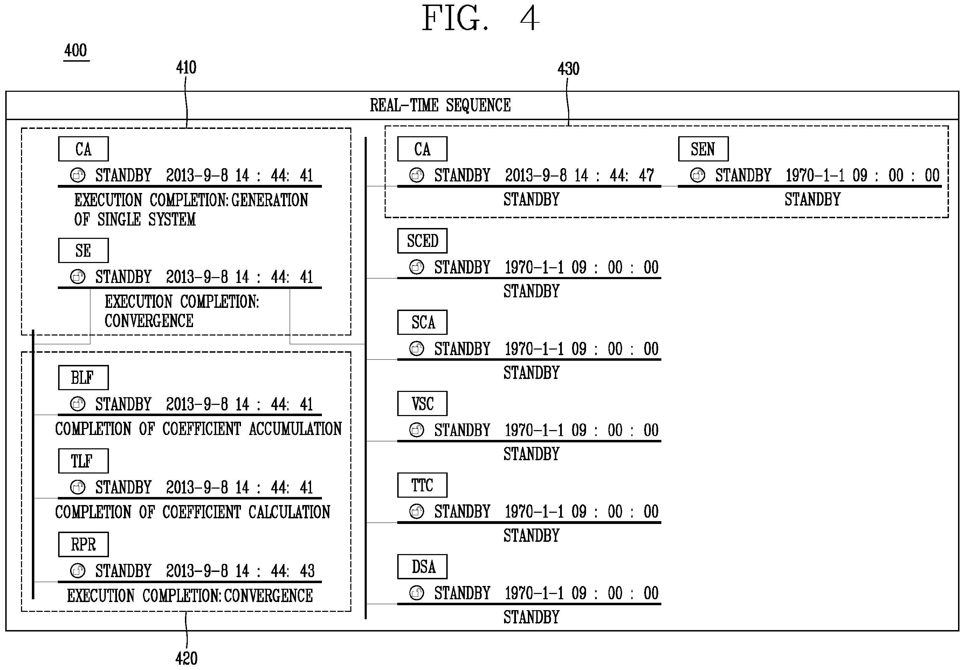

FIG. 4 is a screen exemplary view to be provided to a user in processing of system analysis data according to an exemplary embodiment.

Referring to FIG. 4, FIG. 4 is a screen exemplary view 400 illustrating states and processing results of the data processing groups 210, 220 and 230 classified for each period as described with reference to FIGS. 2 and 3. The data output from the TP unit 211 may provide screens 410 and 420 in a systematic connection state in which the components in the same period (e.g., the group in the period A) can be sequentially processed. The configurations of the processing units of which periods are different may be displayed on parallel configuration screens 430 to 480.

In order to display the processing states of components having the same period, components may be displayed to be extended and connected as shown in the screen 430. The data processing period may be extended or reduced according to the additionally connected components.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims,

## Claims

1. An apparatus for correcting acquired data, which includes a topology processing, TP, unit (211) for acquiring data including circuit breaker information from a supervisory control and data acquisition, SCADA, system, **characterized in that** the apparatus further comprises:
a plurality of data processing groups (210, 220, 230),
wherein the TP unit (211) is configured to identify a kind of the data and a data processing period and to output the data to one of the plurality of data processing groups (210, 220, 230) according to the identified data processing period,
wherein each of the plurality of data processing groups (210, 220 and 230) is configured to perform state estimation with respect to the data output from the TP unit (211), and to process the data according to a predetermined data processing period, wherein each data processing group (210, 220 or 230) includes:
a state estimation, ES, unit (212, 221 or 231) configured to store the data output from the TP unit (211) according to said data processing period; and
at least one data processing unit (213, 214, 222 and 232) configured to process the data stored in the ES unit according to the corresponding data processing period of the data processing group (210, 220 or 230).

2. The apparatus of claim 1, wherein each of the data processing groups includes at least one data processing unit, wherein the data processing units (213, 214, 222 and 232) having the same data processing period are connected in series to the ES units (212, 221 or 231), and the at least one of the data processing groups is connected in parallel to the TP unit.

## Patentansprüche

1. Vorrichtung zum Korrigieren erfasster Daten, die eine Topologieverarbeitungs-, TP-, Einheit (211) zum Erfassen von Daten einschließlich Überlastschalterinformationen von einem Steuerungs- und Datenerfassungs-, SCADA-, System aufweist,
**dadurch gekennzeichnet, dass** die Vorrichtung ferner Folgendes umfasst:
eine Vielzahl von Datenverarbeitungsgruppen (210, 220, 230),
wobei die TP-Einheit (211) dafür konfiguriert ist, eine Art der Daten und eine Datenverarbeitungszeitdauer zu identifizieren und die Daten gemäß der identifizierten Datenverarbeitungszeitdauer an eine der Vielzahl von Datenverarbeitungsgruppen (210, 220, 230) auszugeben,
wobei jede der Vielzahl von Datenverarbeitungsgruppen (210, 220 und 230) dafür konfiguriert ist, eine Zustandsschätzung bezüglich der von der TP-Einheit (211) ausgegebenen Daten vorzunehmen und die Daten gemäß einer vorab bestimmten Datenverarbeitungszeitdauer zu verarbeiten, wobei jede Datenverarbeitungsgruppe (210, 220 oder 230) Folgendes aufweist:
eine Zustandsschätzungs-, ES-, Einheit (212, 221 oder 231), die dafür konfiguriert ist, die von der TP-Einheit (211) gemäß der Datenverarbeitungszeitdauer ausgegebenen Daten zu speichern, und
mindestens eine Datenverarbeitungseinheit (213, 214, 222 und 232), die dafür konfiguriert ist, die in der ES-Einheit gespeicherten Daten gemäß der entsprechenden Datenverarbeitungszeitdauer der Datenverarbeitungsgruppe (210, 220 oder 230) zu verarbeiten.

2. Vorrichtung nach Anspruch 1, wobei jede der Datenverarbeitungsgruppen mindestens eine Datenverarbeitungseinheit aufweist, wobei die Datenverarbeitungseinheiten (213, 214, 222 und 232) mit der gleichen Datenverarbeitungszeitdauer mit den ES-Einheiten (212, 221 oder 231) in Reihe geschaltet sind und die mindestens eine der Datenverarbeitungsgruppen mit der TP-Einheit parallelgeschaltet ist.

## Revendications

1. Dispositif de correction de données acquises, qui inclut une unité de traitement de topologie TP (211) pour acquérir des données incluant une information de disjoncteur provenant d'un système d'acquisition de données et de commande de supervision, SCADA, **caractérisé en ce que** le dispositif comprend en outre :
une pluralité de groupes de traitement de données (210, 220, 230),
dans lequel l'unité TP (211) est configurée pour identifier un type des données et une période de traitement de données et délivrer les données vers un de la pluralité de groupes de traitement de données (210, 220, 230) selon la période de traitement de données identifiée,
dans lequel chacun de la pluralité de groupes de traitements de données (210, 220 e 230) est configuré pour effectuer une estimation d'état par rapport aux données délivrées par l'unité TP (211) et traiter les données selon une période de traitement de données prédéterminée, dans lequel chaque groupe de traitement de données (210, 220 ou 230) inclut :
une unité d'estimation d'état ES (212, 221 ou 231) configurée pour mémoriser les données délivrées par l'unité TP (211) selon ladite période de traitement de données ; et
au moins une unité de traitement de données (213, 214, 222 et 232) configurée pour traiter les données mémorisées dans l'unité ES selon la période de traitement de données correspondante du groupe de traitement de données (210, 220 ou 230).

2. Dispositif selon la revendication 1, dans lequel chacun des groupes de traitements de données inclut au moins une unité de traitement de données, dans lequel les unités de traitement de données (213, 214, 222 et 232) ayant la même période de traitement de données sont connectées en série aux unités ES (212, 221 ou 231) et au moins un des groupes de traitements de données est connecté en parallèle à l'unité TP.
